# EUROPÄISCHE PATENTSCHRIFT

(11) **EP 1 598 270 B1**
(45) Veröffentlichungstag und Bekanntmachung des Hinweises auf die Patenterteilung: **29.04.2009**
(21) Anmeldenummer: 05010875.2
(22) Anmeldetag: 19.05.2005
(51) Int. Cl.: B64D 11/06, B60N 2/02, A47C 7/46, B60N 2/22

(54) **Fluggastsitz mit integriertem Federelement**
Aircraft passenger seat with integrated spring element
Siège de passager d'avion avec élément de ressort intégré

(30) Priorität: 21.05.2004 DE 102004025125; 03.08.2004 US 598265 P
(43) Veröffentlichungstag der Anmeldung: 23.11.2005
(73) Patentinhaber: Airbus Deutschland GmbH, 21129 Hamburg (DE)
(72) Erfinder: Schumacher, Markus, 21614 Buxtehude (DE); Muin, Andrew, 21698 Harsefeld (DE)
(74) Vertreter: Maiwald Patentanwalts GmbH

(56) Entgegenhaltungen:
- EP-A- 1 308 344
- EP-A- 1 637 451
- EP-A2- 1 348 625
- WO-A-20/05066023
- FR-A- 2 069 294
- US-A- 3 468 582
- US-A- 3 762 766

## Beschreibung

Die vorliegende Erfindung betrifft einen Fluggastsitz, insbesondere für eine Passagierkabine eines Flugzeuges. Insbesondere betrifft die vorliegende Erfindung einen Sitz für ein Flugzeug und, eine Sitzgruppe für ein Luftfahrzeug mit einem entsprechenden Sitz.

Herkömmliche Fluggastsitze für Flugzeuge, wie z.B. aus US-3 762 766 bekannt, die alle Merkmale des Oberbegriffs des Anspruchs 1 offenbart, haben ein Tragegestell mit einer entweder fest darauf angeordneten Sitzfläche oder einer schwenkbaren Sitzfläche. Im Bereich der Hinterkante der Sitzfläche ist eine Rückenlehne angeordnet. In Flugzeugen bilden die Passagiersitze vorzugsweise Sitzreihen, wobei zwei oder mehrere nebeneinander angeordnete Passgiersitze oder Sitze zu einer Sitzgruppe zusammengefasst sein können, die von einem gemeinsamen Tragegestell getragen wird. Im Falle von Sitzen mit einer schwenkbaren Sitzfläche lassen sich heute mehrere Ausprägungsformen unterscheiden. Es gibt Modelle, bei denen der Klappmechanismus in nachteiliger Art und Weise manuell betätigt werden muss. Im Falle von automatisch schwenkenden Sitzflächen erweist es sich als nachteilig, dass beispielsweise nicht alle Sitze einer Sitzgruppe schwenkbar sind oder aber, dass in behinderlichter Art und Weise in den durch das Schwenken freigegebenen Raum, Elemente eines Sitzes die beispielsweise für den Klappmechanismus benötigt werden, hineinragen. Üblicherweise ist die Sitzmechanik relativ groß.

Auf jeder Seite eines Sitzes ist üblicherweise eine Armlehne angeordnet. Die Sitzgruppen sind als starre Einheiten für die Montage in den Passagierkabinen der Flugzeuge vorgesehen. Entsprechend der Anforderung der Airlines kann es dabei zu unterschiedlichen Konfigurationen kommen, wobei vorrangig eine größtmögliche Sitzkapazität angestrebt wird.

Ein Nachteil einer Passagierkabine mit einer hohen Sitzanzahl besteht darin, dass aufgrund der schmalen Kabinenlängsgänge - auch Verkehrsfläche oder Aisle genannt - zwischen den Sitzreihen das Ein- und Aussteigen der Passagiere einen hohen Zeitaufwand erfordert. Es können vor allem dann Stockungen entstehen, wenn die Passagiere zum verstauen des Handgepäcks, beispielsweise in Fächern über den Sitzen, im Gang stehen bleiben, wodurch dieser blockiert wird. Üblicherweise sind die Kabinengänge zu schmal, um ein Aneinandervorbeigehen zweier Fluggäste zu ermöglichen. Auch bei Reinigungsarbeiten ist insbesondere ein Raum zwischen den Sitzreihen schwer zugänglich.

Die Bodenzeit zwischen aufeinanderfolgenden Flügen eines Flugzeuges - auch "Turn around"-Zeit genannt - ist für die Wirtschaftlichkeit eines Verkehrsflugzeuges von maßgeblicher Bedeutung. Es ist somit notwendig, dass trotz einer hohen Sitzbelegung in der Passagierkabine die Verkehrsfläche so ausgestaltet ist, dass ein schnelles Ein- und Aussteigen der Passagiere ermöglicht wird und der Zeitaufwand für notwendige Bodenarbeiten minimiert wird.

Es ist eine Aufgabe der vorliegenden Erfindung, einen Fluggastsitz anzugeben, bei dem eine Sitzmechanik wenig extra Raum einnimmt.

Gemäß einem Ausführungsbeispiel der vorliegenden Erfindung, wie in Anspruch 1 angegeben, kann die obige Aufgabe mittels eines Fluggastsitzes für ein Flugzeug gelöst werden, der ein Rückenelement, ein Sitzelement und mindestens ein Rückstellelement umfasst. Zumindest eines des Sitzelements und des Rückenelements sind schwenkbar. Auf mindestens eines des Rückenelements und des Sitzelements wirkt zumindest ein Rückstellelement. Zumindest eines von dem Sitzelement und dem Rückenelement bilden ein erstes Volumen aus, in dem das zumindest eine Rückstellelement angeordnet werden kann.

In Vorteilhafter Art und Weise ermöglicht die Unterbringung des zumindest einem Rückstellelements in zumindest einem des Volumens des Rückenelements und des Sitzelements eine Verkleinerung der, für die Mechanik für das zumindest eine schwenkbare Sitzelement oder Rückenelement beanspruchten Verkehrsfläche. Dies kann eine Vergrößerung der Verkehrsfläche, d.h. der Flächen in der Passagierkabine eines Flugzeuges, auf der sich die Personen bewegen können, bewirken. So kann erreicht werden, dass ein Passagiere durch keine Mechanik behindert werden, wenn sie beispielsweise zum Verstauen des Gepäcks in Fächern über den Sitzen oder unter den Sitzen zwischen zwei aufeinanderfolgende Sitzreihen treten und somit den Gang frei machen, so dass weitere Passagiere zu ihren Plätzen gehen können.

Gemäß einem weiteren Ausführungsbeispiel der vorliegenden Erfindung, wie in Anspruch 2 angegeben, kann eine Arretierung für das schwenkbare Rückenelement existieren. Diese Arretierung kann beispielhaft als Rasterung oder Bremse ausgebildet sein, die verhindern, dass das geschwenkte Rückenelement aufgrund der rückdrängenden Wirkung des Rückstellelements, selbständig in seine Ausgangsposition zurückkehrt. Vorteilhaft bietet sich einem Passagier bei Benutzung des Sitzes die Möglichkeit, eine komfortable Sitzposition einzunehmen.

Gemäß einem weiteren vorteilhaften Ausführungsbeispiel der vorliegenden Erfindung, wie in Anspruch 4 angegeben, kann das Rückenelement an mindestens einem Wippenelement befestigt sein. Auf dieses Wippenelement wirkt das Rückstellelement, das beim Schwenken des Rückenelements dafür sorgt, dass das Rückenelement in seine Ausgangslage zurückkehrt. Das Wippenelement ist an Tragebolzen gelagert. In vorteilhafter Art und Weise wird so die Schwenkfunktion des Rückenelements ermöglicht. Das zumindest eine erste Rückstellelement wirkt dadurch über das Wippenelement direkt auf das Rückenelement. In den Tragbolzen wirken somit nur Lagerkräfte. Mögliche Torsionskräfte werden somit reduziert. Kosten und Material für die Herstellung dieser Lagerung können minimiert werden. In vorteilhafter Art und Weise können die Rückstellelemente so an den Trägern der Sitze befestigt werden, dass sie die beim Schwenken der Sitzfläche freigegebene Verkehrsfläche nicht über die, für das Tragegestell der Sitze benötigte Fläche hinaus, beschneiden.

Gemäß einem weiteren vorteilhaften Ausführungsbeispiel der vorliegenden Erfindung, wie in Anspruch 5 angegeben, kann das Rückstellelement in dem durch das Rückenelement definierte Volumen untergebracht werden. Vorteilhaft wird dadurch der von dem Rückstellelement beanspruchte Raum reduziert. Durch die erfindungsgemäße Ausgestaltung des Volumens mit einer Aussparung für das Rückstellelement kann diese Integration vorgenommen werden ohne, dass eine Beeinträchtigung für einen den Fluggastsitz benützenden Passagier entsteht.

Gemäß einem weiteren vorteilhaften Ausführungsbeispiel der vorliegenden Erfindung, wie in Anspruch 5 angegeben, wird das Rückstellelement in vertikaler Lage eingesetzt. Diese Anordnung erzielt den Vorteil gegenüber einer horizontalen Anordnung, dass das Rückstellelement nicht in die beim Schwenken des Sitzelements freigegebene Fläche ragt. Diese Möglichkeit ist bei horizontalem Einbau gegeben, da Rückstellelemente oft als linear wirkende Kraftgeber ausgebildet sein können. Da die Schwenkrichtung eines Rückenelements in die freizuhaltende Verkehrsfläche gerichtet ist, hätte ein linearer Kraftgeber zur Folge, dass er in die Verkehrsfläche gerichtet wäre.

Gemäß einem weiteren vorteilhaften Ausführungsbeispiel der vorliegenden Erfindung, wie in Anspruch 6 angegeben, kann, gemäß der obigen Aufgabe, um das Komfortmerkmales eines schwenkbaren Rückenelements mit automatischer Rückstellfunktion bereitzustellen, ohne die beim Schwenken der Sitzelemente freigegebene Verkehrsfläche zu reduzieren, ein Rückstellelement zum Einsatz kommen, das in einer ersten Kulisse mit Linearführung geführt ist. In vorteilhafter Art und Weise wird beim Schwenken des Rückenelementes, in welches das erste Rückstellelement - vorteilhaft am Fuß des Rückstellelements - integriert ist, das Rückstellelement durch die Kulisse Linearführung derart betätigt, dass eine der Schwenkbewegung entgegengesetzte Kraft entsteht, die bei Entspannung des Rückstellelements das Rückenelement wieder in eine aufrechte Lage zurückführt. Dadurch kann ein horizontaler Einbau des Rückstellelements, der die beim Schwenken des Sitzelements freigegebene Verkehrsfläche mindern könnte, vermieden werden.

Gemäß einem weiteren vorteilhaften Ausführungsbeispiel der vorliegenden Erfindung, wie in Anspruch 7 angegeben, kann ein vertikaler Einbau des Rückstellelements bei gleichzeitiger Integration in das Rückenelement erreicht werden, indem ein Ende des Rückstellelements mit einem Umlenkhebel verbunden wird; der in einer zweiten muldenförmigen Kulisse geführt ist. Bei Ausübung der Schwenkbewegung des Rückenelementes wird dieser Umlenkhebel derart bewegt, dass er im Zusammenwirken mit der zweiten Kulisse das eine Ende des Rückstellelements so komprimiert, dass eine, der Schwenkbewegung entgegengesetzte Kraft entsteht, die bei Entspannung des Rückstellelements das Rückenelement wieder in eine aufrechte Lage zurückführt.

Gemäß einem weiteren vorteilhaften Ausführungsbeispiel der vorliegenden Erfindung, wie in Anspruch 8 angegeben, kann ein erstes Rückstellelement in dem Volumen, ausgebildet von dem Sitzelement, und ein zweites Rückstellelement in dem Volumen, ausgebildet von dem Rückenelement, integriert sein. Das Sitzelement und das Rückenelement können eine gemeinsame Drehachse besitzen. Die Rückstellelemente sind derart angeordnet, dass sie in einem Abstand von der jeweiligen Drehachse angreifen. Durch diese tangential zum Drehpunkt angreifenden Rückstellelemente wird beim Schwenken sowohl des Sitzelements als auch des Rückenelements ein Drehmoment eingeprägt, das die Schwenkbewegung zu verhindern versucht, sobald es zu einer Entlastung kommt. Zum Ausgleich der bei den Schwenkbewegungen vorkommenden Schwenk-Bewegungen der Rückstellelemente sind, zur Anpassung an die je nach Stellung veränderten Anlenkverhältnisse, die Enden der Rückstellelemente punktuell in Lagern befestigt. In vorteilhafter Art und Weise ermöglicht diese Anordnung das Schwenken des Sitzelements oder des Rückenelements ohne, dass dafür zusätzlicher Platz der Verkehrsfläche in Anspruch genommen werden muss.

Weitere vorteilhafte Ausführungsbeispiele des Fluggastsitzes gemäß der vorliegenden Erfindung sind in den Ansprüchen 9, 10, 11 und 12 angegeben.

Gemäß einem weiteren vorteilhaften Ausführungsbeispiel der vorliegenden Erfindung, kann das Rückstellelement für das Sitzelement und das Rückstellelement für das Rückenelement jeweils auf einem Zwischenhebel montiert sein. Der Zwischenhebel kann auf einer gemeinsamen Achse montiert sein. Es erweist sich bei diesem Ausführungsbeispiel als vorteilhaft, dass die Rückstellelemente in dem Volumen, das von dem Sitzelement ausgeprägt wird, und in dem Volumen, das von dem Rückenelement ausgeprägt wird, fest montiert werden kann. Dadurch muss kein weiterer Platz für eine potenzielle Ausgleichswegung zur Anpassung der Anlenkverhältnisse zur Verfügung gestellt werden. Die je nach Stellung des Rückenelements oder Sitzelements veränderten Anlenkverhältnisse werden durch die Stellung der Zwischenhebel ausgeglichen. Dadurch entsteht vorteilhaft eine hohe Gestaltungsfreiheit bei dem Design des Sitzelements und des Rückenelements.

Gemäß einem weiteren vorteilhaften Ausführungsbeispiel der vorliegenden Erfindung, wie in Anspruch 13 angegeben, können bei der Ausprägung des Rückstellelements Elemente mit linearer Expansion, linearer Kompression oder Federn eingesetzt werden. Beispiele für Federn sind die Gasdruckfeder oder die Spiralfeder.

Gemäß einem weiteren vorteilhaften Ausführungsbeispiel der vorliegenden Erfindung, wie in Anspruch 14 angegeben, kann das Sitzelement an einer ersten Drehachse und das Rückenelement an einer zweiten Drehachse befestigt sein. Die Rückstellelemente können direkt auf die jeweilige Achse wirkend realisiert sein und für das Sitzelement und für das Rückenelement unabhängig voneinander ein Rückstellmoment erzeugen. Dabei können die Rückstellelemente beispielsweise als Torsionsfeder, Spiralfeder oder Haarnadelfeder ausgebildet sein. In vorteilhafter Art und Weise ermöglicht dieses Ausführungsbeispiel neben der Integration der Rückstellelemente in das Innere des Sitzelements bzw. des Rückenelements, dass Freiheit bei der Konstruktion solcher Fluggastsitze herrscht und beispielsweise die Lage der Drehachsen ausschließlich ergonomischen Gesichtspunkten gehorchen muss.

Gemäß einem weiteren vorteilhaften Ausführungsbeispiel der vorliegenden Erfindung, wie in Anspruch 15 angegeben, wird eine Sitzgruppe für ein Fahrzeug angegeben wobei alle Sitzelemente und Rückenelemente schwenkbar sind. Beispielsweise kann das Fahrzeug ein Flugzeug sein. Insbesondere bei einem Flugzeug ist es ein Ziel eine größtmögliche Sitzkapazität im Passagierraum unterzubringen bei gleichzeitiger möglichst maximaler freier Verkehrsfläche. In vorteilhafter Art und Weise kann die Verwendung einer oben genannten Sitzgruppe dienen dieses Ziel zu erreichen. Insbesondere, wenn alle Fluggastsitze der Sitzgruppe mit schwenkbaren Sitzelementen ausgestattet sind.

Anspruch 16 der vorliegenden Erfindung betrifft ein Flugzeug mit zumindest einem Fluggastsitz.

Im folgenden werden Ausführungsbeispiele der vorliegenden Erfindung mit Verweis auf die folgenden Figuren beschrieben.
Fig. 1 zeigt eine schematisierte dreidimensionale Seitenansicht eines Gestells einer Sitzgruppe.
Fig. 2 zeigt eine schematisierte vertikale Schnittansicht eines Ausführungsbeispiels eines Rückstellelements in einer Kulisse mit Linearführung, das in einem weiteren Ausführungsbeispiel eines Fluggastsitzes in einem Flugzeug gemäß der vorliegenden Erfindung eingesetzt werden kann.
Fig. 3 zeigt eine schematisierte vertikale Schnittansicht eines Ausführungsbeispiels eines Rückstellelements mit einem Umlenkhebel in einer muldenförmigen Kulisse, das in einem weiteren Ausführungsbeispiel eines Fluggastsitzes in einem Flugzeug gemäß der vorliegenden Erfindung eingesetzt werden kann.
Fig. 4 zeigt eine schematisierte Ansicht eines weiteren Ausführungsbeispiels eines Fluggastsitzes in einem Flugzeug gemäß vorliegender Erfindung.
Fig. 5 zeigt eine schematisierte Ansicht eines weiteren Ausführungsbeispiels eines Fluggastsitzes in einem Flugzeug gemäß vorliegender Erfindung mit geschwenktem Sitzelement und geschwenktem Armelement.
Fig. 6 zeigt eine schematisierte Ansicht eines weiteren Ausführungsbeispiels eines Fluggastsitzes in einem Flugzeug gemäß vorliegender Erfindung mit geschwenktem Rückenelement.
Fig. 7 zeigt eine schematisierte dreidimensionale Ansicht eines weiteren Ausführungsbeispiels eines Fluggastsitzes in einem Flugzeug gemäß vorliegender Erfindung.
Fig. 8 zeigt eine schematisierte dreidimensionale Ansicht eines weiteren Ausführungsbeispiels eines Fluggastsitzes wie in Fig. 7 gezeigt mit geschwenktem Sitzelement.
Fig. 9 zeigt eine schematisierte dreidimensionale Ansicht eines weiteren Ausführungsbeispiels eines Fluggastsitzes wie in Fig. 7 gezeigt mit geschwenktem Rückenelement.
Fig. 10 zeigt eine schematisierte dreidimensionale Ansicht eines weiteren Ausführungsbeispiels eines Fluggastsitzes in einem Flugzeug gemäß vorliegender Erfindung.
Fig. 11 zeigt eine schematisierte Ansicht eines Ausführungsbeispiels der Befestigung eines Sitzelements und eines Rückenelements mittels Torsionsfedern für einen Fluggastsitz in einem Flugzeug gemäß vorliegender Erfindung.
Fig. 12 zeigt ein Luftfahrzeug, insbesondere ein Verkehrsflugzeug, das eine mindestens einen Sitz gemäß vorliegender Erfindung aufweist.

In der folgenden Beschreibung werden für gleiche oder sich entsprechende Elemente die gleichen Bezugsziffern verwendet.

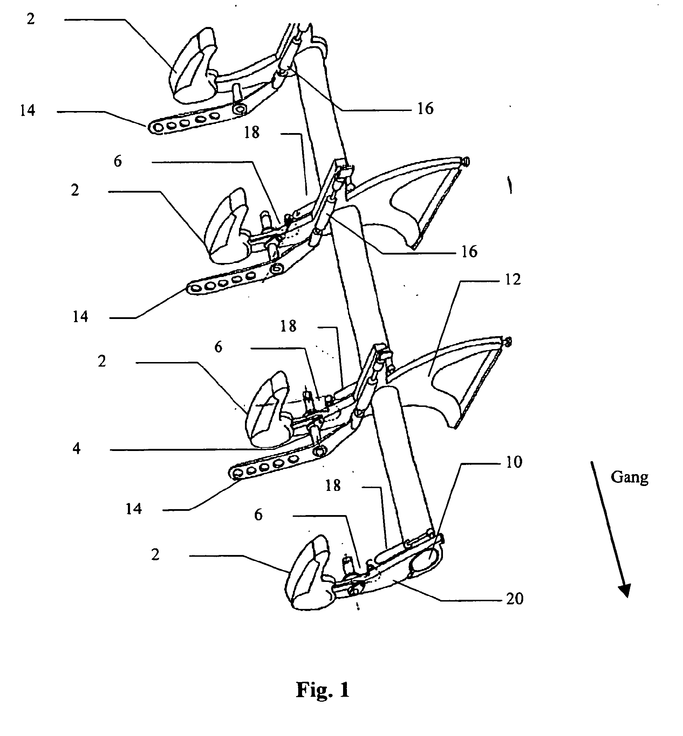

Fig. 1 zeigt eine schematisierte dreidimensionale Seitenansicht eines Gestells einer Sitzgruppe gemäß der vorliegenden Erfindung. Dieses Gestell besteht aus einem durchgehenden Trageholm 10, der auf zwei Gestellfüßen abgestützt ist. Weiterhin ist das Sitzgestell mit Sitzteilern 20 verbunden, welche die Rückenelemente seitlich umfassen. An der Spitze der Sitzteiler 20 sind Armlehnen 2 angebracht. Die Abbildung in Fig. 1 zeigt ein Gestell für eine Sitzgruppe auf deren linken Seite (in dem dargestellten Ausführungsbeispiel) sich der Gang eines Flugzeuges befindet. Spiegelverkehrt käme diese Sitzgruppe auf der anderen Seite des Ganges zum Einsatz. Zur Freigabe von Verkehrsflächen sind Vorrichtungen vorgesehen, die zum Schwenken von Sitzelementen (die Sitzelemente sind in Fig. 1 nicht gezeichnet) geeignet sind. Ein zweites Rückstellelement 18 wirkt auf einen Schwenkhebel 6, der mit einem Tragebolzen 4 drehfest verbunden ist. An dem Tragebolzen 4 kann drehfest ein Sitzelement befestigt werden, so dass ein Entspannen des zweiten Rückstellelements 18 über den Schwenkhebel 6 in eine Drehbewegung gewandelt wird und über den Tragebolzen 4 an ein Sitzelement weitergegeben wird. Dadurch wird, wegen der drehfesten Verbindung des Tragebolzens 6 mit dem Sitzelement, das Sitzelement in eine vertikale Position gebracht. So wird eine Fläche freigegeben, die als freie Verkehrsfläche benutzt werden kann, beispielsweise um, über den Sitzgruppen angebrachte, Gepäckfächer zu bedienen. Über eine Koppelstange (in Fig. 1 nicht gezeichnet) kann der Schwenkhebel 6 mit der Armlehne 2 gekoppelt sein, so dass beim Entspannen des zweiten Rückstellelements 18 nicht nur das Sitzelement geschwenkt wird, sondern zusätzlich auch die Armlehne 2. Dies begünstigt weiter die Freigabe der Verkehrsfläche bei Nichtbenutzung eines Sitzes. Gemäß Fig. 1 können die drei dem Gang zugewandten Armlehnen 2 automatisch schwenkbar ausgestaltet werden. Bei der am weitesten von dem Gang abgewandten Armlehne 2 ist ein automatisches Schwenken nur mit Zusatzaufwand zu erreichen, durch Anbringung eines zusätzlichen Rückstellelements, das nicht mit einem Sitzelement gekoppelt ist. Fig. 1 zeigt, dass die zweiten Rückstellelemente 18 und die Schwenkhebel 6 sitzteilernahe 20 angebracht sind. Dadurch lassen sie sich leicht in seitlichen Polsterwülsten unterbringen.

Jeder der in diesem Gestell befindlichen Sitze kann so einzeln unabhängig von den anderen Sitzen der Gruppe schwenkbar sein.

Fig. 1 zeigt auch ein Wippenelement 14, das von dem Tragebolzen 4 getragen wird. An diesem Wippenelement 4 kann ein Rückenelement befestigt sein, so dass ein Schwenken des Wippenelements 4 auch ein Schwenken des Rückenelements zur Folge hat. Ein erstes Rückstellelement 16 greift derart an dem Wippenelement 14 an, dass es das Wippenelement 14 und ein daran montiertes Rückenelement in eine aufrechte Position drängt. Der Tragebolzen 4 ist als passives Lagerelement gestaltet. Die Torsionskräfte die er aufnehmen muss sind relativ gering, weshalb nur ein geringer Materialaufwand für seine Herstellung nötig ist, was wiederum zu Kosteneinsparungen im Vergleich zu ähnlichen bekannten Konstruktionen führt. Darüber hinaus sind die ersten Rückstellelemente 16 sitzteilernahe 20 angebracht. Dadurch wird verhindert, dass sie über ein für die Konstruktion des Sitzgruppengestell hinausgehendes Maß, in die beim Schwenken der Sitzelemente freigegebenen Verkehrsfläche hineinragt.

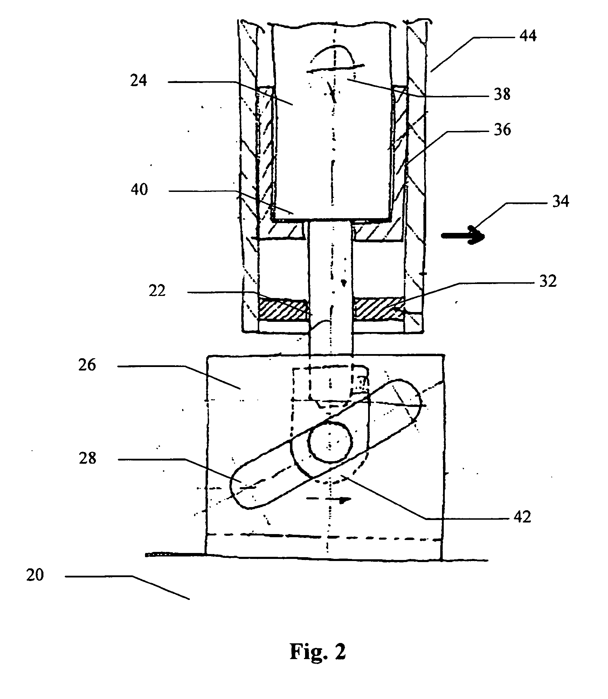

Fig. 2 zeigt eine schematisierte vertikale Schnittansicht eines Ausführungsbeispiels eines Rückstellelements 24 in einer Kulisse 26 mit Linearführung, das in einem weiteren Ausführungsbeispiels eines Fluggastsitzes in einem Flugzeug gemäß der vorliegenden Erfindung eingesetzt werden kann. Diese spezielle Kombination erlaubt einen vertikalen Einbau des Rückstellelements, das hier als erste lineare Gasdruckfeder 24 ausgestaltet ist. Diese erste Gasdruckfeder 24 ist vertikal zur Flugrichtung 34 in ein Volumen am Fuß eines Rückenelements 44 integriert. Die Flugrichtung 34 ist in Fig. 2 durch einen Pfeil symbolisiert. Die Gasdruckfeder kann in einem Chassis 36 vormontiert werden. Dieses Chassis kann mittels eines nicht näherbeschriebenen Schnappverschluss in das Rückenelement 44 spielfrei arretiert werden. So vorbereitet weist dieses Bauteil Vorzüge zur einfachen Montage, Wartung und zum besseren Kraftschluss auf.

Die Kulisse 26 mit der Linearführung 28, die als Langloch ausgebildet ist, ist mit dem Sitzteiler 20 fest verbunden. Das Langloch 28 weist in Längsrichtung zwei Enden auf. Das erste Ende definiert einen ersten Abstand zum Drehpunkt 38. Dieser ist länger als der Abstand, den das zweite Ende zum Drehpunkt 38 bildet. Die Tauchstange 22 weist nach unten und wird in dem Längsloch geführt. Sie wird aus dem Rückenelement 44 mittels der Führung 32 herausgeführt. Der Drehpunkt 38 des Rückenelements befindet sich oberhalb des unteren Ende 40 der ersten Gasdruckfeder. Die Schwenkung eines Rückenelements erfolgt in der Regel gegen die Flugrichtung 34. Wird nun das Rückenelement geschwenkt, wird dadurch das untere Ende 40 der ersten Gasdruckfeder 24 und somit auch das untere Ende der Tauchstange 22 und der daran befestigte Bolzen 42 in Flugrichtung geschwenkt. Der Bolzen 42 ist so in der Linearführung 28 geführt, dass er der Bewegung nur folgen kann, wenn er die Tauchstange 22 in die erste Gasfeder 24 drückt. Die Verkürzung erfolgt wegen der oben beschriebenen besonderen Anordnung des Langlochs. Es ist eine Eigenschaft einer Gasfeder 24, bei Kompression eine dieser Kompression entgegenwirkende Kraft zu erzeugen. Dadurch wird über den Bolzen 42 und der Tauchstange 22 als Hebelarm ein Drehmoment um den Drehpunkt 38 erzeugt, das der Ursache für die Schwenkung entgegenwirkt. Sobald die auslenkende Kraft nachlässt schiebt sich somit der Bolzen 42 in die Richtung des Bereichs des Langlochs, das den größeren Abstand zum Drehpunkt 38 hat. Dadurch wird auch das Rückenelement wieder in die ursprüngliche vertikale Position bewegt.

Es ist für den Sitzkomfort dienlich, wenn bei Benutzung des Rückenelements 44, die für die Schwenkung sorgende Kraft nicht ständig von beispielsweise einem Passagier aufgebracht werden muss. Deshalb ist in der Regel eine Arretierung oder Verriegelung für das Rückenelement in der gewünschten Position vorgesehen. Eine Rückstellung kann damit nur erfolgen, wenn diese Arretierung oder Verriegelung gelöst ist.

Durch die Integration der ersten Gasfeder 24 in das Rückenelement 44 behindert dieser Bestandteil nicht unnötig die Verkehrsfläche des Flugzeuges. Durch die Integration der Gasfeder 48 in Volumen, die beispielsweise von Wülsten der Polstergebildet werden, beeinträchtigen sie in keiner Weise den Sitzkomfort. Zur Vermeidung der Klemmgefahr kann der Bereich zwischen unterem Ende des Rückenelements und der Kulisse 26 beispielsweise mit einem Faltbelag gekapselt werden.

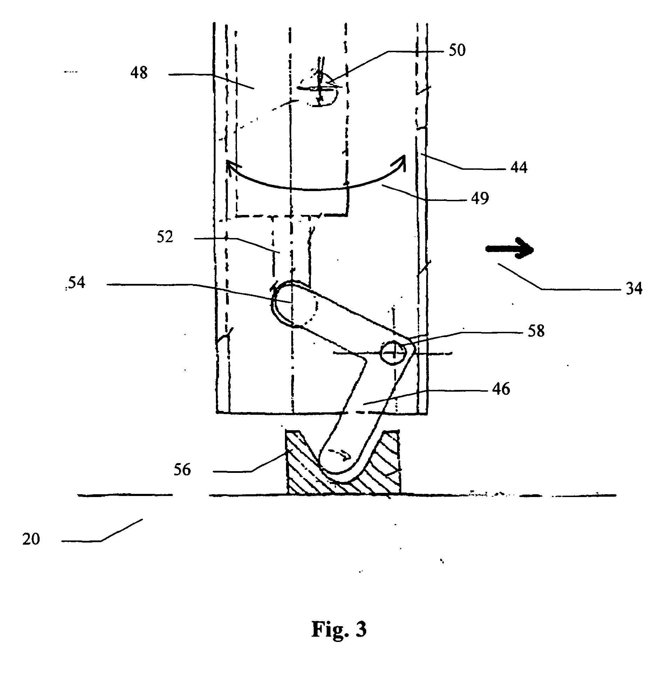

Fig. 3 zeigt eine schematisierte vertikale Schnittansicht eines Ausführungsbeispiels eines Rückstellelements mit einem Umlenkhebel 46 in einer muldenförmigen Kulisse 56, das in einem dritten Ausführungsbeispiels eines Fluggastsitzes in einem Flugzeug gemäß der vorliegenden Erfindung eingesetzt werden kann. Diese spezielle Kombination erlaubt einen vertikalen Einbau des Rückstellelements, das hier als zweite lineare Gasdruckfeder 48 ausgestaltet ist. Diese zweite Gasdruckfeder 48 ist vertikal zur Flugrichtung 34 in ein Volumen am Fuß eines Rückenelements 44 integriert. Die Flugrichtung 34 ist in Fig. 3 durch einen Pfeil symbolisiert.

Die muldenförmige Kulisse 56 ist mit dem Sitzteiler 20 fest verbunden. Die zweite Tauchstange 52 weist nach unten auf die Kulisse 56 zu und ist noch innerhalb des Rückenelements über ein Gelenk 54 mit dem um 90° gekröpften Umlenkhebel 46 verbunden.

Der Drehpunkt dieses Umlenkhebel 46 ist an einem Festlager 58 innerhalb des Rückenelements angelenkt. Das untere Ende des Umlenkhebels 46 befindet sich in einer muldenartigen Kulisse 56. Die Schwenkung eines Rückenelements erfolgt in der Regel gegen die Flugrichtung 34 um den Drehpunkt 50 des Rückenelements. Wird nun das Rückenelement 44 geschwenkt, wird dadurch das untere Ende der zweiten Tauchstange 52 und der Umlenkhebel 46 in Flugrichtung 34 geschwenkt. Der Umlenkhebel befindet sich mit dem unteren Ende formschlüssig in der Muldenkulisse 56. Dadurch wird die Schwenkbewegung des unteren Ende des Umlenkhebel 46 gestoppt und über das Festlager 58 in eine Kreisbewegung um das Festlager 58 im Uhrzeigersinn gewandelt. Über das Gelenk 54, das mit dem oberen Ende des Umlenkhebel 46 verbunden ist, wird die Drehbewegung des Umlenkhebels 46 in eine Linearbewegung gewandelt, die nunmehr über die zweite Tauchstange 52 die zweite Gasfeder 48 komprimiert.

Es ist eine Eigenschaft einer Gasfeder 48, bei Kompression eine dieser Kompression entgegenwirkende Kraft zu erzeugen. Dadurch wird in umgekehrter Reihenfolge über die zweite Tauchstange 52, über das Gelenk 54 und das untere Ende des Umlenkhebel 46 eine Kraft auf die muldenförmige Kulisse 56 erzeugt, die das Rückenelement wieder in die ursprüngliche vertikale Position bewegt.

Je nach Stellung des Umlenkhebel 46 muss die Lage des Rückstellelements 48 in dem Rückenelement den Anlenkverhältnissen angepasst werden. Dazu ist an dem oberen Ende des Rückstellelements eine punktuelle Befestigung in einem Lager vorhanden. Innerhalb des Einbauraumes muss ein gewisser Schwenkraum 49 verfügbar sein.

Es ist für den Sitzkomfort dienlich, wenn bei Benutzung des Rückenelements 44 die für die Schwenkung sorgende Kraft nicht ständig von beispielsweise einem Passagier aufgebracht werden muss. Deshalb ist in der Regel eine Arretierung oder Verriegelung für das Rückenelement in der gewünschten Position vorgesehen. Eine Rückstellung kann damit nur erfolgen, wenn diese Arretierung oder Verriegelung gelöst ist.

Durch die Integration der zweiten Gasdruckfeder 48 in das Rückenelement 44 behindert dieser Bestandteil nicht unnötig die freigegebene Verkehrsfläche des Flugzeuges. Durch die Integration der Gasfeder 48 in Volumen, die beispielsweise von Wülste der Polster gebildet werden, beeinträchtigen sie in keiner Weise den Sitzkomfort. Zur Vermeidung der Klemmgefahr kann der Bereich zwischen unterem Ende des Rückenelements und der Kulisse 56 beispielsweise mit einem Faltbelag gekapselt werden.

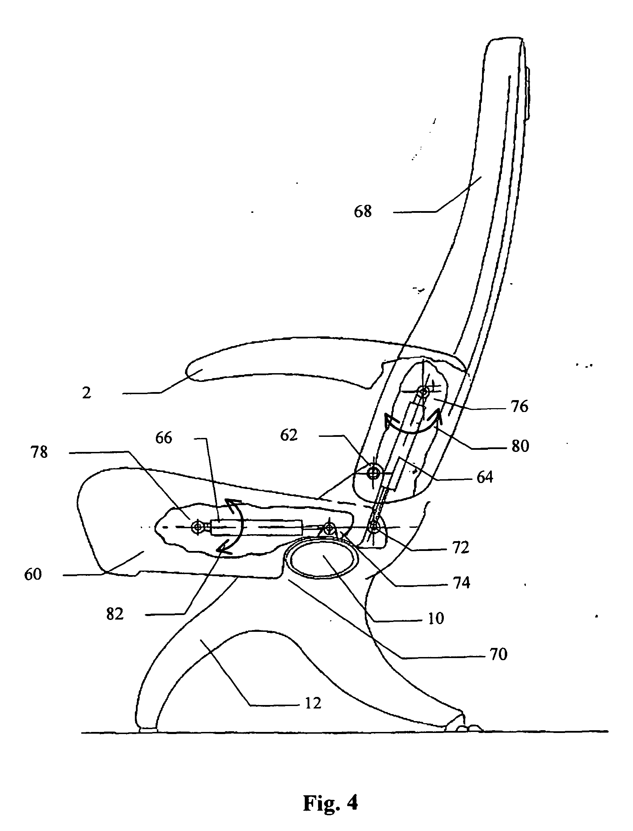

Fig. 4 zeigt eine schematisierte Ansicht eines weiteren Ausführungsbeispiels eines Fluggastsitzes in einem Flugzeug gemäß vorliegender Erfindung. Der Sitz bzw. Fluggastsitz umfasst ein Sitzelement 60 sowie ein Rückenelement 68. In Fig. 4 ist eine Armlehne 2 dargestellt, die sich in Sitzrichtung auf der linken Seite des Sitzes befindet. Das Sitzelement 60 ist auf einem durchgehenden Holm 10 abgestützt. Dieser wiederum ist zwischen dem Sitzfuß 12 und dem in dieser Abbildung nur angedeuteten Sitzteiler 20 befestigt. Zur Ablage auf dem Holm 10 befindet sich eine der Holmstruktur angepasste Kontur 70. Das Rückenelement 68 und das Sitzelement 60 sind auf einer gemeinsamen Achse 62 drehbar gelagert. Dabei handelt es sich nicht zwingend um eine gemeinsame Achse. Es ist vielmehr durchaus auch möglich, wenn es die Sitzgeometrie erfordert, dass das Sitzelement 60 und das Rückenelement 68 auf unterschiedlichen Achsen gelagert sind. In dem Rückenelement 68 und dem Sitzelement 60 integriert ist ein drittes 64 bzw. ein viertes 66 Rückstellelement.

Über ein erstes Bolzenwiderlager 72 ist das dritte Rückstellelement 64 mit einem von dem Gestellfuß 12, dem Sitzteiler 20 und dem Holm 10 verbunden. Über ein zweites Bolzenwiderlager 74 ist das vierte Rückstellelement 66 mit einem von dem Gestellfuß 12, dem Sitzteiler 20 und dem Holm 10 verbunden. Das erste Bolzenwiderlager 72 und das zweite Bolzenwiderlager 74 können auch zu einem gemeinsamen Bolzenwiderlager zusammengefasst sein. Mittels einer ersten punktuellen Befestigung 76 ist das dritte Rückstellelement 64 mit dem Rückenelement 68 verbunden. Mittels einer zweiten punktuellen Befestigung 78 ist das vierte Rückstellelement 66 mit dem Sitzelement 60 verbunden. Fig. 4 zeigt das dritte Rückstellelement 64 in entspanntem Zustand und das vierte Rückstellelement 66 in komprimiertem Zustand. Dieser Zustand herrscht, wenn ein Passagier auf dem Sitz aufrecht sitzt. Da beide Rückstellelemente einen Abstand von der Drehachse 62 besitzen, prägen sie beide jeweils ein Moment um die Drehachse 62 ein. Das dritte Rückstellelement 64 prägt auf das Rückenelement 68 ein Moment gegen den Uhrzeigersinn um die Drehachse 62 ein und hält so das Rückenelement 68 in einer Aufrechten Position. Das vierte Rückstellelement 66 prägt auf das Sitzelement 60 ein Moment im Uhrzeigersinn um die Drehachse 62 ein, so dass das Sitzelement 60 in eine vertikale Position gedrängt wird.

Die Schwenkbewegung des Rückenelements 68 und des Sitzelements 60 verursachen Schwenkbewegungen um das erste punktuelle Befestigung 74 bzw. die zweite punktuelle Befestigung 78. Deshalb ist um des dritte Rückstellelement 64 und das vierte Rückstellelement 66 ein Schwenkraum 80 bzw. 82 vorzusehen.

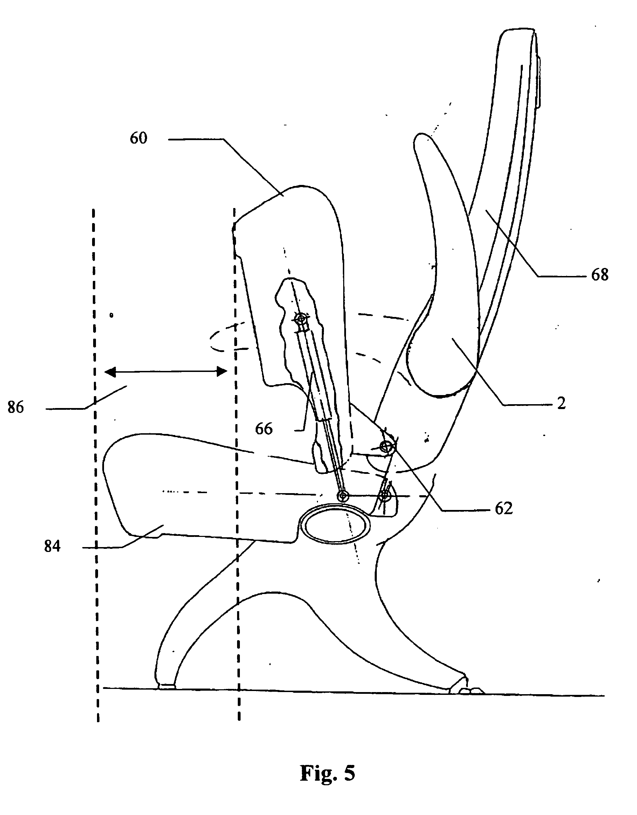

Fig. 5 zeigt eine schematisierte Ansicht eines weiteren Ausführungsbeispiels eines Fluggastsitzes in einem Flugzeug gemäß vorliegender Erfindung mit geschwenktem Sitzelement und geschwenktem Armelement. Dieser Zustand tritt ein, wenn der Sitz unbenutzt und entlastet ist. Das vierte Rückstellelement 66 ist entspannt und hat durch das Moment um die Drehachse 62 das Sitzelement 60 in Richtung des Uhrzeigersinnes gegen das Rückenelement 68 bewegt. Es ist in Fig. 5 ebenfalls zusehen, dass in diesem Zustand die Armlehne 2 optimal nach oben geschwenkt ist. Dies wird entweder manuell oder mittels einer Kopplung der Armlehne 2 mit dem Sitzelement 60, die hier nicht eingezeichnet ist, erreicht. Zum Vergleich ist in Fig. 5 die Position des Sitzelements in belasteten Zustand 84 gezeigt. Deutlich ist die bei geschwenkter Sitzposition zusätzlich freigegebene Fläche 86 der Verkehrsfläche zu sehen.

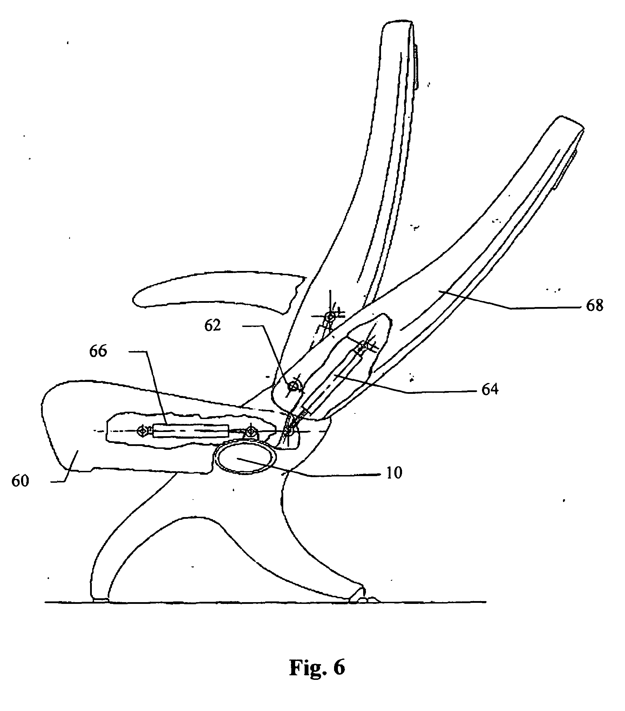

Fig. 6 zeigt eine schematisierte Ansicht eines weiteren Ausführungsbeispiels eines Fluggastsitzes in einem Flugzeug gemäß vorliegender Erfindung mit geschwenktem Rückenelement. Dieser Zustand tritt ein, wenn das Sitzelement 60 belastet und das Rückenelement 68 geschwenkt ist. Die Rückstellelemente 64 und 66 sind in diesem Zustand komprimiert. Das Sitzelement 60 liegt auf dem Holm 10 auf. Es wird von der Gewichtskraft, die eine möglicherweise auf dem Sitzelement 60 sitzende Person ausübt, in dieser Position gehalten. In vorteilhafter Art und Weise existiert für das Rückenelement eine Arretierung bzw. Verriegelung (nicht dargestellt), die das Rückenelement entgegen dem von Rückstellelement 64 eingeprägten Moment um die Achse 62 in dieser Position hält.

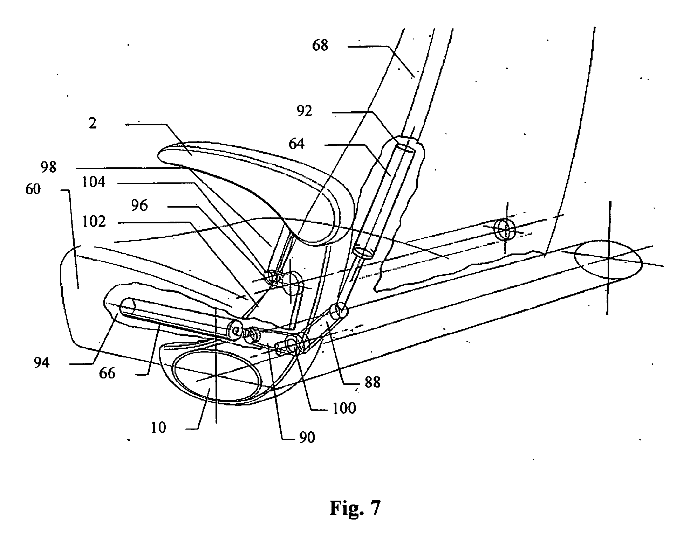

Fig. 7 zeigt eine schematisierte dreidimensionale Ansicht eines weiteren Ausführungsbeispiels eines Fluggastsitzes in einem Flugzeug gemäß vorliegender Erfindung. Im Gegensatz zu Fig. 4, Fig. 5 und Fig. 6 sind die Enden 92 und 94 der Rückstellelemente 64 und 66 nicht punktuell beweglich befestigt, sondern fest fixiert. Somit ist kein zusätzlicher Schwenkraum für die Rückstellelemente vorzusehen. Die nach wie vor vorhandenen Änderungen der Anlenkverhältnisse werden in diesem Fall von einem ersten Zwischenhebel 88 und einem zweiten Zwischenhebel 90 ausgeglichen. Die Zwischenhebel sind auf dem gemeinsamen Bolzenwiderlager 100 drehbar befestigt. Es besteht auch die Möglichkeit, dass die Zwischenhebel an getrennten Bolzenwiderlagern 72 und 74 befestigt sind. Da kein zusätzlicher Schwenkraum für die Rückstellelemente benötigt wird, wird für dieses Ausführungsbeispiel kein zusätzlicher Platz in dem Sitzelement 60 und dem Rückenelement 68 benötigt.

Ebenfalls in Fig. 7 dargestellt ist die Koppelung der Armlehne 2 eines Sitzes mit dem Sitzelement 60. An der Aufhängung 102 des Sitzelements 60 ist ein Hebel 96 drehfest angebracht. Wird das Sitzelement 60 in Richtung Rückenelement 68 geschwenkt, bewegt sich das Gelenk 104 auf einer Kreisbahn nach oben. Über das Gelenk 104 wird die Kreisbewegung über die Koppelstange 98, die mit der Armlehne 2 verbunden ist, in eine Linearbewegung gewandelt, die für das Anheben der Armlehne 2 sorgt. In vorteilhafter Art und Weise wird so nicht nur unnötige von dem Sitzelement 60 beanspruchte Verkehrsfläche, freigegeben, sondern auch die von der Armlehne 2 beanspruchte Fläche.

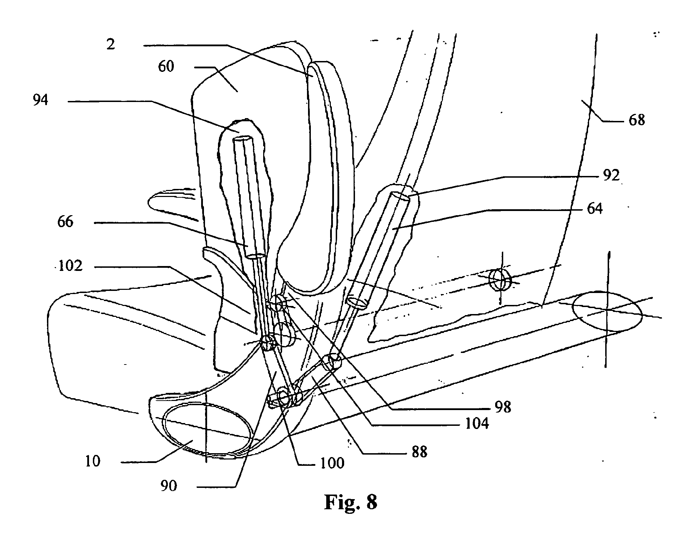

Fig. 8 zeigt eine schematisierte dreidimensionale Ansicht eines weiteren Ausführungsbeispiels eines Fluggastsitzes wie in Fig. 7 gezeigt mit geschwenktem Sitzelement.

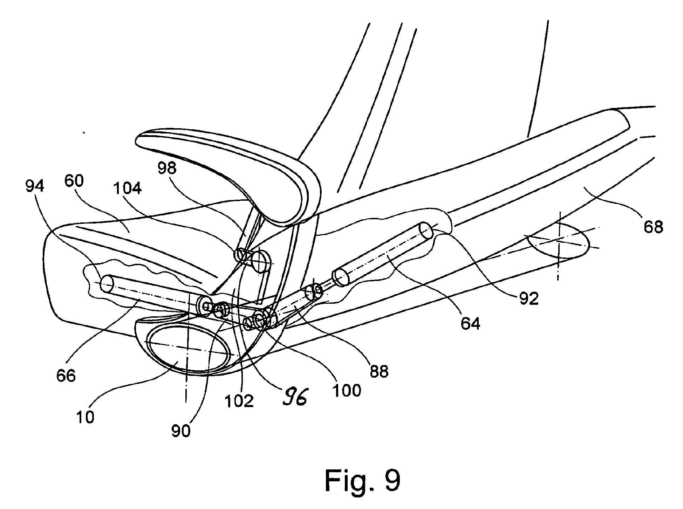

Fig. 9 zeigt eine schematisierte dreidimensionale Ansicht eines weiteren Ausführungsbeispiels eines Fluggastsitzes wie in Fig. 7 gezeigt mit geschwenktem Rückenelement.

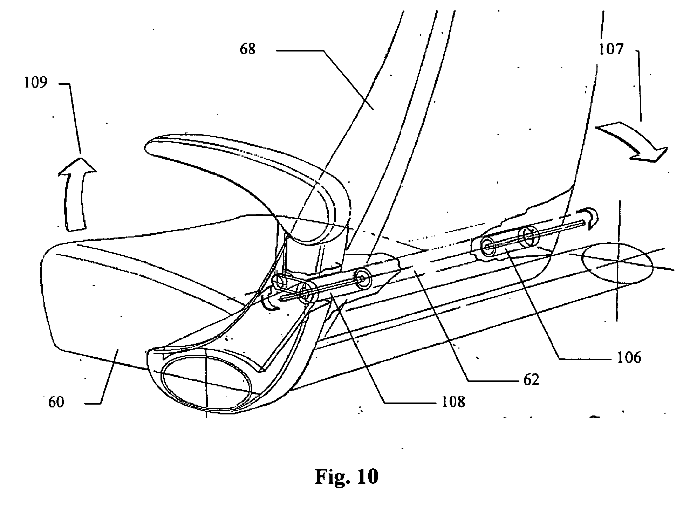

Fig. 10 zeigt eine schematisierte dreidimensionale Ansicht eines weiteren Ausführungsbeispiels eines Fluggastsitzes in einem Flugzeug gemäß vorliegender Erfindung. Bei diesem Ausführungsbeispiel wurde auf Rückstellelemente mit linearer Expansion oder Kompression verzichtet. Stattdessen wird auf (z.B. reibungsbehaftete) Torsionsfedern zurückgegriffen. Ebenso sind Spiral- oder Haarnadelfedern denkbar. Der Vorteil der Torsionsfedern ist, dass die rückstellenden Drehmomente direkt an den Drehachsen erzeugt werden können. Sie lassen sich somit gut in das Sitz- bzw. Rückenelement integrieren. Kein zusätlicher Einbauraum ist für diese Art von Feder nötig. Auch die Lage der Drehachsen für das Sitzelement 60 und das Rückenelement 68 ist frei wählbar, sodass sie nur ergonomischen Gesichtspunkten gehorchen muss. In Fig. 10 sind nun ein erster Torsionsstab 106 und ein zweiter Torsionsstab 108 dargestellt. Beide Torsionsstäbe sitzen auf einer gemeinsamen Achse 62.

Fig. 10 zeigt das Ausführungsbeispiel bei normaler Sitzposition. Ausgehend von dieser Position kann das Rückenelement 68 entsprechend der Pfeilrichtung 107 nach hinten geschenkt werden. Dadurch erzeugt der Torsionsstab 106 ein Moment, das versucht das Rückenelement 68 entgegen der Pfeilrichtung 107 in eine aufrechte Position zu bringen. Ein zweiter Torsionsstab 108 erzeugt in dieser geschwenkten Position ein Drehmoment auf das Sitzelement 60, dass dieses wieder in die aufrechte Position in Pfeilrichtung 109 aufgerichtet wird.

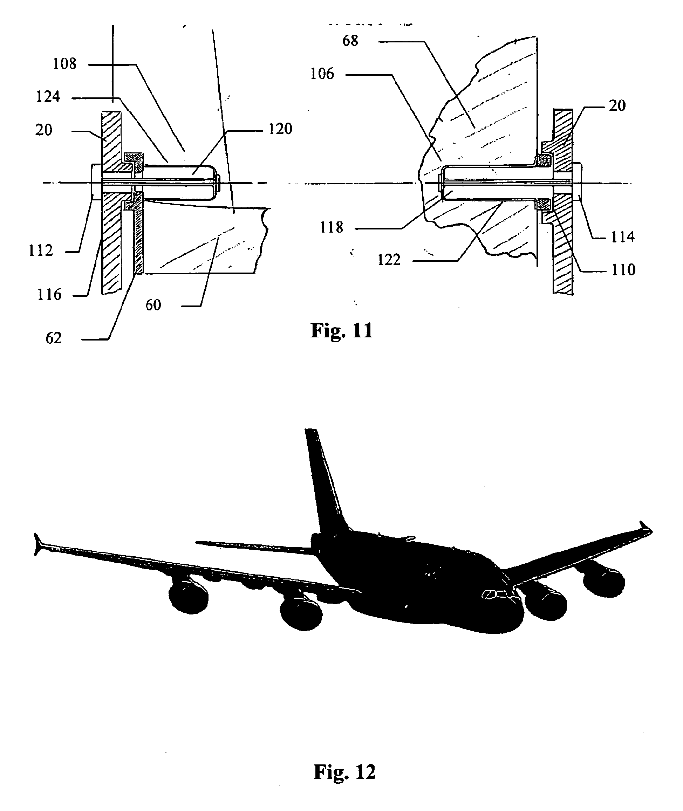

Fig. 11 zeigt eine schematisierte Ansicht eines Ausführungsbeispiels der Befestigung eines Sitzelements und eines Rückenelements mittels einer Torsionsfeder für einen Fluggastsitz in einem Flugzeug gemäß vorliegender Erfindung. Hier wird verdeutlicht, wie die Torsionsstäbe 106 und 108 mit dem Rückenelement 68 und dem Sitzelement 60 verbunden sind. Der Sitzteiler 20 bildet zur Befestigung des Rückenelement eine Lagerbuchse 110 aus. An dem Sitzteiler 20 wird eine Hülse 114 befestigt, die eine erste Achse 118 aufnimmt. Diese ist starr mit dem Sitzteiler 20 verbunden und um sie herum ist eine erste Ummantelung 122 angebracht, die fest mit dem Rückenelement 68 verbunden ist. Über diese Ummantelung 122 wird das Drehmoment, das von dem aus Ummantelung 122, Achse 118 und darin enthaltenen Federelement gebildeten Torsionsstab 106 erzeugt wird, an das Rückenelement 68 weitergegeben.

Ein anderer Sitzteiler 20 bildet einen Lagerbolzen 112 aus, an dem die Aufhängung des Sitzelements 60 gelagert ist. An dem Sitzteiler wird eine zweite Hülse 116 befestigt, die eine zweite Achse 120 aufnimmt. Diese ist starr mit dem Sitzteiler 20 verbunden und um sie herum ist eine Ummantelung 124 angebracht, die fest mit der Aufhängung des Sitzelements 60 verbunden ist. Über diese Ummantelung 124 wird ein Drehmoment, das von dem aus Ummantelung 124, Achse 120 und darin enthaltenen Federelement gebildete Torsionsstab 108 erzeugt wird, an das Sitzelement 60 weitergegeben.

Fig. 12 zeigt ein Luftfahrzeug, insbesondere ein Verkehrsflugzeug, das eine mindestens einen Sitz gemäß vorliegender Erfindung aufweist.

## Patentansprüche

1. Fluggastsitz für ein Flugzeug, umfassend:
ein Rückenelement (68);
ein Sitzelement (60); und
zumindest ein erstes Rückstellelement (64);
wobei das Sitzelement (60) und das Rückenelement (68) schwenkbar sind;
wobei das zumindest eine erste Rückstellelement (64) direkt auf das schwenkbare Rückenelement (68) wirkt;
wobei das Sitzelement (60) ein erstes Volumen definiert;
wobei das Rückenelement (68) ein zweites Volumen definiert; und
wobei das zumindest eine erste Rückstellelement (64) in zumindest einem des ersten und des zweiten Volumens angeordnet ist,
wobei das dem fixierten Ende (92) entgegengesetzte Ende an einem drehbar gelagerten Zwischenhebel (88) gelagert ist;
**dadurch gekenzeichnet daß**
ein Ende (92) des ersten Rückstellelements (64) fest im Rückenelement (68) fixiert ist.

2. Fluggastsitz nach Anspruch 1,
wobei eine Arretierung vorgesehen ist, um die Rückenelement (68) in einer verschwenkten Position zu arretieren.

3. Fluggastsitz nach Anspruch 1 oder 2,
wobei ein Armlehnenelement (2) vorgesehen ist;
wobei das Armlehnenelement (2) schwenkbar ist;
wobei zumindest ein zweites Rückstellelement (66) auf zumindest eines des Sitzelements (60) und des Armlehnenelements (2) wirkt.

4. Fluggastsitz nach einem der Ansprüche 1 bis 3,
wobei das zumindest eine Rückenelement (68) zumindest ein Wippenelement (14) aufweist;
wobei das zumindest ein Rückstellelement (16) auf dieses Wippenelement (14) wirkt, dass bei einem Schwenken des Rückenelements (68) durch das zumindest ein Rückstellelement (16), eine Kraft auf das Rückenelement (68) wirkt, die der Schwenkbewegung entgegen wirkt.

5. Fluggastsitz nach einem der Ansprüche 1 bis 4,
wobei das zumindest eine erste Rückstellelement (64) in vertikaler Anordnung angeordnet ist.

6. Fluggastsitz nach einem der Ansprüche 1 bis 5,
wobei ein Ende der Tauchstange (22) in zumindest einer ersten Kulisse (26) mit Linearführung (28) geführt ist;
wobei die Linearführung (28) aus einem Langloch gebildet wird;
wobei das Langloch zwei Enden aufweist;
wobei das erste Ende einen ersten Abstand zu der Drehachse (38) des Rückenelements (44) definiert;
wobei das zweite Ende des Langlochs einen zweiten Abstand zu der Drehachse (38) des Rückenelements (44) definiert;
wobei das Langloch so angebracht ist, dass der erste Abstand größer als der zweite Abstand ist;
wobei das Ende der Tauchstange (22) bei Bewegung in Schwenkrichtung eine Kreisbewegung um die Drehachse (38) beschreibt, sodass durch die Führung des Endes der Tauchstange (22) in dem Langloch, das Rückstellelement (24) derart komprimiert wird, dass eine der Schwenkbewegung entgegengesetzte Kraft entsteht, die, bei Entspannung des ersten Rückstellelements (24), das Rückenelement (44) wieder in eine aufrechte Lage zurückführt.

7. Fluggastsitz nach einem der Ansprüche 1 bis 5,
wobei ein Ende des zumindest einen ersten Rückstellelements (48) mit einem Umlenkhebel (46) verbunden ist, der in einer zweiten muldenförmigen Kulisse (56) geführt ist;
wobei das eine Ende des zumindest einen ersten Rückstellelements (48) bei Bewegung in Schwenkrichtung eine Kreisbewegung beschreibt;
wobei ein Ende des Umlenkhebel (46) im Zusammenwirken mit der muldenförmigen Kulisse (56) angehoben wird, so dass über die Tauchstange (52) das zumindest eine Rückstellelement (48) derart komprimiert, dass eine, der Schwenkbewegung entgegengesetzte Kraft entsteht, die bei Entspannung des zumindest einen ersten Rückstellelements (48) das Rückenelement (68) wieder in eine aufrechte Lage zurückführt.

8. Fluggastsitz nach einem der Ansprüche 1 bis 3,
wobei das zumindest eine erste Rückstellelement (64) in dem Rückenelement (68) angeordnet ist;
wobei das zumindest eine erste Rückenelement (64) an zumindest einer Achse (72) drehbar gelagert ist;
wobei das zumindest eine erste Rückstellelement (64) in einem ersten Abstand von der Rückenelementdrehachse (62) derart angebracht ist, dass beim Schwenken des Rückenelements (68) um die Rückenelementdrehachse (62) ein Drehmoment eingeprägt wird, das das Rückenelement (68) in eine aufrechte Position zurückdrängt;
wobei zumindest ein zweites Rückstellelement (66) in dem Sitzelement angeordnet ist;
wobei das Sitzelement (60) an zumindest einer Achse (62) drehbar gelagert ist;
wobei das zumindest eine zweite Rückstellelement (66) in einem zweiten Abstand von der Sitzelementdrehachse (62) derart angebracht ist, dass um die Sitzelementdrehachse (62) ein Drehmoment eingeprägt wird, das das Sitzelement (60) bei Schwenkung in eine horizontale Lage, in eine vertikale Position zurückdrängt.

9. Fluggastsitz nach Anspruch 8,
wobei das zumindest eine erste Rückstellelement (64) und das zumindest eine zweite Rückstellelement (66) auf einem gemeinsamen Bolzen befestigt sind;

10. Fluggastsitz nach Anspruch 8,
wobei ein erstes Ende des zumindest einen erste Rückstellelements (64) drehbar an einem ersten Bolzenwiderlager (72) befestigt ist; und
wobei ein erstes Ende des zumindest einen zweite Rückstellelements (66) drehbar an einem zweiten Bolzenwiderlager (74) befestigt ist.

11. Fluggastsitz nach Anspruch 8,
wobei ein Ende (94) des zweiten Rückstellelements (66) fest fixiert ist und
wobei das dem fest fixierten Ende (94) entgegengesetzte Ende an einem drehbar gelagerten Zwischenhebel (90) gelagert ist.

12. Fluggastsitz nach Anspruch 11,
wobei die Zwischenhebel (88, 90) an einem gemeinsamen Bolzenwiderlager (100) drehbar befestigt sind.

13. Fluggastsitz nach einem der Ansprüchen 1 bis 12,
wobei das Rückstellelement (16, 18, 24, 48, 64, 66) als Element mit linearer Expansion oder Feder ausgebildet ist.

14. Fluggastsitz nach dem Anspruch 3,
wobei das erste und zweite Rückstellelement als Torsionsfeder ausgebildet ist;
wobei das Sitzelement (60) an einer ersten Drehachse (120) befestigt ist;
wobei das Rückenelement (68) an einer zweiten Drehachse (118) befestigt ist;
wobei zumindest ein erstes Rückstellelement (108) derart direkt auf die erste Drehachse (120) wirkt, dass bei einem Schwenken des Sitzelements (60) durch das zumindest eine erste Rückstellelement (108) eine Kraft auf das Sitzelement (69) wirkt, die der Schwenkbewegung entgegen wirkt;
wobei zumindest ein zweites Rückstellelement (106) derart direkt auf die zweite Drehachse (118) wirkt, dass bei einem Schwenken des Rückenelements (68) durch das zumindest eine zweite Rückstellelement (106) eine Kraft auf das Rückenelement (68) wirkt, die der Schwenkbewegung entgegen wirkt.

15. Fluggastsitzgruppe umfassend zumindest zwei Fluggastsitze nach einem der Ansprüche 1 bis 14.

16. Flugzeug mit zumindest einem Fluggastsitz nach einem der Ansprüche 1 bis 14 oder einer Fluggastsitzgruppe nach Anspruch 15.

## Claims

1. Flight passenger seat for an airplane, comprising:
a back element (68);
a seat element (60); and
at least one first reset element (64);
wherein the seat element (60) and the back element (68) are pivotable;
wherein the at least one first reset element (64) acts directly on the back element (68) which is pivotable;
wherein the seat element (60) defines a first volume;
wherein the back element (68) defines a second volume; and
wherein the at least one first reset element (64) is arrangeable in at least one of the first and the second volume;
wherein the end opposite of an end (92) of the first reset element (64) is supported at a pivotally supported intermediate lever (88);
**characterized in that**
an end (92) of the first reset element (64) is firmly mounted in the back element (68).

2. The flight passenger seat according to claim 1,
wherein a locking is provided to lock the back element (68) in a pivoted position.

3. The flight passenger seat according to claim 1 or 2,
wherein an arm rest element (2) is provided;
wherein the arm rest element (2) is pivotable;
wherein at least one second reset element (66) acts on at least one of the seat element (60) and the arm rest element (2).

4. The flight passenger seat according to one of claims 1 to 3,
wherein the at least one back element (68) has at least one rocker element (14);
wherein the at least one reset element (16) acts on the rocker element (14) such that on pivoting the back element (68), a force is applied on the back element (68) by means of the at least one reset element (16) which acts against a pivoting movement.

5. The flight passenger seat according to one of claims 1 to 4,
wherein the at least one first reset element (64) is disposed in a vertical arrangement.

6. The flight passenger seat according to one of claims 1 to 5,
wherein an end of a submerging rod (22) is guided in at least one first connecting link (26)
with a linear guide (28);
wherein the linear guide (28) is formed by an elongated hole;
wherein the elongated hole has two ends;
wherein the first end defines a first distance to a pivoting axis (38) of the back element (44);
wherein the second end of the elongated hole defines a second distance to the pivoting axis (38) of the back element (44);
wherein the elongated hole is mounted in such a way that the first distance is larger than the second distance;
wherein, on moving in pivoting direction, the end of the submerging rod (22) performs a circular movement about the pivoting axis (38), such that by guiding the end of the submerging rod (22) in the elongated hole, the reset element (24) is compressed in such a manner that a force counteracting the pivoting movement is generated which, on releasing the first reset element (24), forces the back element (44) again into an upright position.

7. The flight passenger seat according to one of claims 1 to 5,
wherein an end of the at least one first reset element (48) is connected to a turn-around lever (46), which is guided in a second cavity-shaped connecting link (56);
wherein the one end of the at least one first reset element (48) performs a circular movement, on moving in a pivoting direction;
wherein, in coaction with the cavity-shaped connecting link (56), one end of the turn-around lever (46) is lifted, so that by means of the submerging rod (52), the at least one reset element (48) is compressed in such a way that a force, counteracting the pivoting movement is generated which on releasing the at least one first reset element (48) forces the back element (68) again into an upright position.

8. The flight passenger seat according to one of claims 1 to 3,
wherein the at least one first reset element (64) is arranged in the back element (68);
wherein the at least one first back element (68) is pivotably supported at at least one axis (72);
wherein the at least one first reset element (64) is mounted at a first distance to the back element rotating axis (62) such that on pivoting the back element (68) at the back element rotating axis (62), a torque is applied, which urges the back element (68) into an upright position;
wherein at least one second reset element (66) is arranged in the seat element (60);
wherein the seat element (60) is rotatably supported by at least one rotating axis (62);
wherein the at least one second reset element (66) is mounted at a second distance to the seat element rotating axis (62) in such a way that a torque is applied to the seat element rotating axis (62), which, on pivoting in a horizontal position, urges the seat element (60) back into a vertical position.

9. The flight passenger seat according to claim 8,
wherein the at least one first reset element (64) and the at least one second reset element (66) are mounted onto a shared bolt.

10. The flight passenger seat according to claim 8,
wherein a first end of the at least one first reset element (64) is rotatably mounted onto a first bolt counter bearing (72); and
wherein a first end of the at least one second reset element (66) is rotatably mounted to a second bolt counter bearing (74).

11. The flight passenger seat according to claim 8,
wherein an end (94) of the second reset element (66) is firmly mounted and
wherein the end opposite of the firmly mounted end (94) is supported at a pivotally supported intermediate lever (90).

12. The flight passenger seat according to claim 11,
wherein the intermediate levers (88, 90) are rotatably mounted on a shared bolt counter bearing (100).

13. The flight passenger seat according to one of claims 1 to 12,
wherein the reset element (16, 18, 24, 48, 64, 66) is arranged as an element with a linear expansion or spring.

14. The flight passenger seat according to claim 3,
wherein the first and second reset elements are designed as torsion spring;
wherein the seat element (60) is mounted at a first rotating axis (120);
wherein the back element (68) is mounted at a second rotating axis (118);
wherein the at least one first reset element (108) acts directly on the first rotating axis (120) such that, on pivoting the seat element (60), a force counteracting the pivoting movement is applied to the seat element (69) by means of the at least one first reset element (108);
wherein at least one second reset element (106) is directly applied to the second rotating axis (118) such that, on pivoting the back element (68), a second force counteracting the pivoting movement is applied to the back element (68) by means of the at least one second reset element (106).

15. Flight passenger seat group, comprising at least two flight passenger seats according to one of claims 1 to 14.

16. Airplane with at least one flight passenger seat according to one of claims 1 to 14 or one flight passenger seat group according to claim 15.

## Revendications

1. Siège de passager pour un avion, comprenant:
un élément de dossier (68);
un élément de siège (60) ; et
au moins un premier élément de rappel (64);
siège dans lequel
l'élément de siège (60) et l'élément de dossier (68) sont pivotants ;
le au moins un premier élément de rappel (64) agit directement sur l'élément de dossier pivotant (68),
l'élément de siège (60) définit un premier volume ;
l'élément de dossier (68) définit un second volume, et
le au moins un premier élément de rappel (64) est disposé dans au moins l'un du premier et du second volume ;
l'extrémité, opposée à l'extrémité fixée (92), étant montée sur un levier intermédiaire (88) monté pivotant,
**caractérisé en ce que**
une extrémité (92) du premier élément de rappel (64) est fixée dans l'élément de dossier (68).

2. Siège de passager suivant la revendication 1, dans lequel il est prévu un arrêt pour bloquer l'élément de dossier (68) dans une position de pivotement.

3. Siège de passager suivant l'une des revendications 1 et 2, dans lequel
il est prévu un élément d'accoudoir (2);
l'élément d'accoudoir (2) est pivotant;
au moins un second élément de rappel (66) agit sur au moins l'un de l'élément de siège (60) et de l'élément d'accoudoir (2).

4. Siège de passager suivant l'une des revendications 1 à 3, dans lequel au moins un élément de dossier (68) présente au moins un élément de bascule (14) ; le au moins un élément de rappel (16) agit sur cet élément de bascule (14), lequel élément exerce, lors d'un pivotement de l'élément de dossier (68) par le au moins un élément de rappel (16), une force sur l'élément de dossier (68) qui contrecarre le mouvement de pivotement.

5. Siège de passager suivant l'une des revendications 1 à 4, dans lequel au moins un premier élément de rappel (64) est disposé en agencement vertical.

6. Siège de passager suivant l'une des revendications 1 à 5, dans lequel
une extrémité de la barre de plongée (22) est guidée dans au moins une première coulisse (26) avec un guidage linéaire (28) ;
le guidage linéaire (28) est formé d'un trou oblong;
le trou oblong présente deux extrémités ;
la première extrémité définit une première distance par rapport à l'axe de rotation (38) de l'élément de dossier (44) ;
la seconde extrémité du trou oblong définit une seconde distance par rapport à l'axe de rotation (38) de l'élément de dossier (44),
le trou oblong est pratiqué de sorte que la première distance est supérieure à la seconde distance ;
l'extrémité de la barre de plongée (22), lors du déplacement dans la direction de pivotement, décrit un mouvement circulaire autour de l'axe de rotation (38) si bien que, par le guidage de l'extrémité de la barre de plongée (22) dans le trou oblong, l'élément de rappel (24) est comprimé de telle sorte qu'il en résulte une force, opposée au mouvement de pivotement, qui, lors de la détente du premier élément de rappel (24), ramène l'élément de dossier (44) dans une position verticale.

7. Siège de passager suivant l'une des revendications 1 à 5, dans lequel une extrémité de le au moins un premier élément de rappel (48) est raccordée à un levier de renvoi (46), guidé dans une seconde coulisse (56) en forme d'auge ; une extrémité de le au moins un premier élément de rappel (48) décrit un mouvement circulaire lors du déplacement dans la direction de pivotement ; une extrémité du levier de renvoi (46) est relevée en coopération avec la coulisse en forme d'auge (56) si bien que, par l'intermédiaire de la barre de plongée (52), le au moins un élément de rappel (48) est comprimé de telle sorte qu'il en résulte une force, opposée au mouvement de pivotement, qui, lors de la détente de le au moins un premier élément de rappel (48), ramène l'élément de dossier (68) dans la position verticale.

8. Siège de passager suivant l'une des revendications 1 à 3, dans lequel,
le au moins un premier élément de rappel (64) est disposé dans l'élément de dossier (68) ;
le au moins un premier élément de dossier (64) est monté tournant sur au moins un axe (72) ;
le au moins un premier élément de rappel (64) est monté à une première distance de l'axe de rotation (62) de l'élément de dossier de telle sorte que, lors du pivotement de l'élément de dossier (68) autour de son axe de rotation (62), il en résulte un couple qui repousse l'élément de dossier (68) dans une position verticale ;
au moins un second élément de rappel (66) est disposé dans l'élément de siège ;
l'élément de siège (60) est monté tournant sur au moins un axe (62) ;
le au moins un second élément de rappel (66) est monté à une seconde distance de l'axe de rotation (62) de l'élément de siège de telle sorte qu'il en résulte un couple, autour de l'axe de rotation (62), qui repousse l'élément de siège (60), lors du pivotement dans une position horizontale, dans une position verticale.

9. Siège de passager suivant la revendication 8, dans lequel le au moins premier élément de rappel (64) et le au moins second élément de rappel (66) sont fixés sur un axe commun.

10. Siège de passager suivant la revendication 8, dans lequel une première extrémité de le au moins un premier élément de rappel (64) est fixée tournante sur une première butée d'axe (72) ; et une première extrémité de le au moins second élément de rappel (66) est fixée tournante sur une seconde butée d'axe (74).

11. Siège de passager suivant la revendication 8, dans lequel une extrémité (94) du second élément de rappel (66) est fixée, et l'extrémité, opposée à l'extrémité fixée (94), est montée sur un levier intermédiaire (90) monté tournant.

12. Siège de passager suivant la revendication 11, dans lequel les leviers intermédiaires (88, 90) sont fixés tournants sur une butée d'axe commune (100).

13. Siège de passager suivant l'une des revendications 1 à 12, dans lequel l'élément de rappel (16, 18, 24, 48, 64, 66) est réalisé sous forme d'élément avec une expansion linéaire ou sous forme de ressort.

14. Siège de passager suivant la revendication 3, dans lequel le premier et le second élément de rappel sont réalisés sous forme de ressort de torsion ;
l'élément de siège (60) est fixé sur un premier axe de rotation (120) ;
l'élément de dossier (68) est fixé sur un second axe de rotation (118) ;
au moins un premier élément de rappel (108) agit directement sur le premier axe de rotation (120) de telle sorte que, lors d'un pivotement de l'élément de siège (60) par le au moins un premier élément de rappel (108), une force, qui contrecarre le mouvement de pivotement, agit sur l'élément de siège (69);
au moins un second élément de rappel (106) agit directement sur le second axe de rotation (118) de telle sorte que, lors d'un pivotement de l'élément de dossier (68) par le au moins un élément de rappel (106), une force, qui contrecarre le mouvement de pivotement, agit sur l'élément de dossier (68).

15. Groupe de sièges de passagers comprenant au moins deux sièges de passagers suivant l'une des revendications 1 à 14.

16. Avion comprenant au moins un siège de passager suivant l'une des revendications 1 à 14 ou un groupe de sièges de passagers suivant la revendication 15.
